# EUROPEAN PATENT APPLICATION

(11) **EP 3 712 681 A1**
(43) Date of publication of application: **23.09.2020**
(21) Application number: 17932069.2
(22) Date of filing: 17.11.2017
(51) Int. Cl.: G02B 27/01, G02B 27/02

(54) **DISPLAY DEVICE**

(71) Applicant: Shimadzu Corporation, Kyoto-shi, Kyoto 604-8511 (JP)
(72) Inventor: ARITA, Yoshiki, Kyoto-shi Kyoto 604-8511 (JP)
(74) Representative: Mewburn Ellis LLP
(86) International application number: PCT/JP2017/041552
(87) International publication number: WO 2019/097695

(57) **Abstract**

A display device 1 includes: an image forming unit 10; a collimator optical system 20 deflecting light emitted from the image forming unit to a parallel light flux; and a light guide 30 magnifying the parallel light flux. The image forming unit 10 includes: an optical member 131 having, in its inside, a wall face on which the light is totally reflected, the light being incident in the wall face at an incident angle larger than or equal to a predetermined angle; a light source 11 emitting the light so that the light is incident in the wall face at the incident angle larger than or equal to the predetermined angle; and a reflection display element 14 having a plurality of two-dimensionally arranged reflection portions each having a reflection surface capable of changing its orientation between a first direction and a second direction in accordance with an external control signal, the reflection display element 14 being disposed so that the reflection surface oriented to the first direction reflects the light that has been reflected on the wall face toward a direction different from a direction along which the light is incident in the reflection display element.

## Description

### TECHNICAL FIELD

The present invention relates to a display device, such as a head mount display (HMD) and a head-up display (HUD). The display device includes a virtual image optical system provided with a light guide for magnifying a light flux (exit pupil).

### BACKGROUND ART

In automobiles, a head-up display is used. The head-up display projects letters and images displayed on a screen to form a virtual image in front of a driver through a virtual image optical system including a combiner. In aircraft, a head mount display is used in addition to the head-up display. The head mount display projects letters and images through the mechanism the same as the head-up display, i.e., through the virtual image optical system including the combiner provided in a helmet to be worn on the head of a pilot, and thus forms a virtual image in front of the pilot. Such a display device adopts a mechanism in which a small light flux (exit pupil) formed by an image forming unit, which includes a light source and a display element, and a collimator optical system is introduced in a light guide to be magnified and displayed (Patent Literatures 1 to 4, for example). As a display element for use in the display device, a transparent liquid crystal display element, a reflection liquid crystal display element, or a digital micromirror device (DMD), for example, is used.

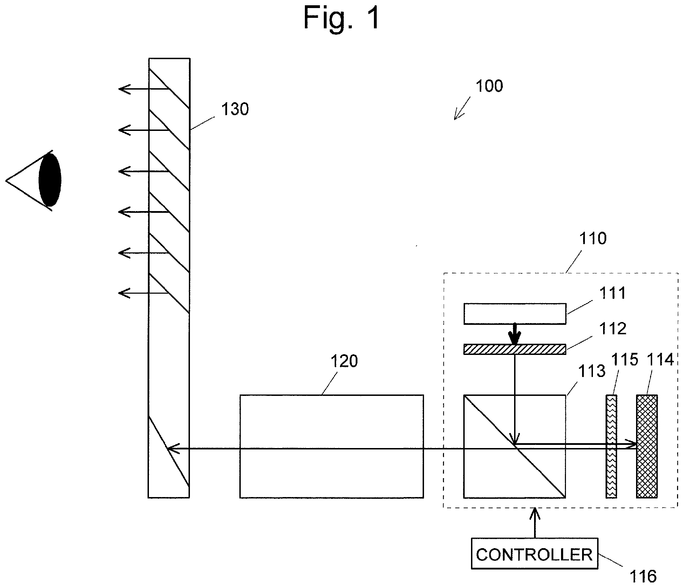

Fig. 1 shows an example of the conventional configuration of a display device that includes an image forming unit, a collimator optical system, and a light guide. A display device 100 includes an image forming unit 110, a collimate optical system 120, and a light guide 130. The image forming unit 110 includes a light source 111, a polarization plate 112, a polarized beam splitter 113, a digital micromirror device 114, a 1/4λ wavelength plate 115, and a controller 116 for controlling operations of the light source 111 and the digital micromirror device 114. The digital micromirror device 114 is a display element provided with multiple mirrors each of which corresponds to a single pixel and which are arranged in a latticed pattern, and a driving unit for changing the angle of the reflection face of each mirror. A predetermined voltage is applied to the driving unit under control of the controller 116, so that the state of each pixel is switched between the ON state and the OFF state.

In a display device that displays colored images, the light source unit 111 is provided with light emitting diode (LED) light sources respectively emitting three primary colors of red, green, and blue. From each of the LED light sources, equipolarized pulsed-light of each color is successively and repeatedly emitted. The equipolarized light emitted from the light source 111 is introduced in the polarization plate 112, and then predetermined polarized light (s-polarized light, for example) is extracted and incident in the polarized beam splitter 113. The polarized beam splitter 113 contains, in its interior, a reflection surface that reflects the predetermined polarized light (s-polarized light). The predetermined polarized light (s-polarized light) is reflected on the reflection surface, passes through the 1/4λ wavelength plate 115, and is incident in the digital micromirror device 114. Of the light incident in the digital micromirror device 114, only the light incident in the ON-state mirrors is reflected on these mirrors, and again passes through the 1/4λ wavelength plate 115 to be incident in the polarized beam splitter 113. The predetermined polarized light (s-polarized light) that travels to and from the polarized beam splitter 113 and the digital micromirror device 114 passes through the 1/4λ wavelength plate 115 twice, whereby the polarized state of the predetermined polarized light is deflected (to p-polarized light). The light is reflected only on the predetermined pixels (accordingly, an image is formed) to be subjected to the conversion of the polarized state (to p-polarized light), again enters the polarized beam splitter 113, and passes through the reflection surface. The light is then deflected to a parallel light flux by the collimator optical system 120, and is introduced in the light guide 130. In the light guide 130, the light flux (exit pupil) of the image formed by the image forming unit 110 and the collimator optical system 120 is magnified.

### CITATION LIST

### PATENT LITERATURE

Patent Literature 1: JP 2015-184561 A
Patent Literature 2: JP 5447714 B
Patent Literature 3: JP 5299391 B
Patent Literature 4: JP 5698297 B

### NON PATENT LITERATURE

Non Patent Literature: 1 "SmartEyeglass Developer Edition", [website], Sony Mobile Communications Japan, Inc., [searched on October 24, 2017], through the Internet, URL: https://developer.sonymobile.com/ja/smarteyeglass/

### SUMMARY OF INVENTION

### TECHNICAL PROBLEM

Display devices including the virtual image optical system provided with a light guide are required to have a high luminance, in order to enhance the visibility of the displayed images. In particular, in the display device mentioned earlier, the light flux of an image formed by the image forming unit and the collimator optical system is magnified by the light guide, and then displayed. Thus, it is necessary in the image forming unit to form an image with high luminance. In the conventional image forming unit shown in Fig. 1, however, only the s-polarized light (or p-polarized light) is used among the equipolarized light emitted from the LED light sources of the respective colors. Thus, approximately 50 % of the quantity of the light emitted from the LED light sources is wasted, causing the luminance of the image to be hardly increased.

A purpose to be achieved by the present invention is to provide a display device that includes a virtual image optical system provided with a light guide, and that can effectively use the light emitted from a light source.

### SOLUTION TO PROBLEM

The present invention developed for solving the previously described problem is a display device including an image forming unit that includes:
a) an optical member configured to have, in its interior, a wall face on which light incident at an incident angle larger than or equal to a predetermined angle is totally reflected;
b) a light source configured to emit light so that the light is incident in the wall face at an incident angle larger than or equal to the predetermined angle; and
c) a reflection display element configured to have a plurality of two-dimensionally arranged reflection portions each having a reflection surface capable of changing its orientation between a first direction and a second direction in accordance with an external control signal, the reflection display element being disposed so that the reflection surfaces oriented to the first direction reflect the light that has been reflected on the wall face toward a direction different from a direction along which the light is incident in the reflection display element;
the display device further comprising:
d) a collimator optical system configured to deflect the light emitted from the image forming unit to a parallel light flux; and
e) a light guide configured to magnify the parallel light flux.

For the optical member, a prism can be used, for example. If the prism is used, the inner wall face of the prism may serve as the wall face.

The reflection display element is a digital micromirror device, for example. The two-dimensional arrangement is a latticed arrangement in typical cases. Here, it may be a honeycomb arrangement, or the like. The first direction corresponds to a direction to which the reflection surface is oriented when the reflection unit is turned ON in accordance with a control signal from the exterior. The second direction corresponds to a direction to which the reflection surface is oriented when the reflection unit is turned OFF. Then, an image is formed by the light reflected on the reflection surface oriented to the first direction.

In the display device according to the present invention, light is emitted from the light source to the wall face inside the optical member, so as to be incident in the wall face at the incident angle larger than or equal to the critical angle (the predetermined angle). The light totally reflected on the wall face is incident in the reflection display element. A reflection surface or surfaces oriented to the first direction (i.e., a reflection surface or surfaces controlled to be turned ON) among the reflection surfaces of the reflection units that constitute the reflection display element, reflects the light toward a direction different from a direction along which the light is incident in the reflection surface (which avoids the reflection light from returning back to the light source). The light reflected on the reflection surfaces form an image. In the display device according to the present invention, the light from the light source is totally reflected on the wall face inside the optical member so as to be incident in the reflection display element. Accordingly, the luminance of the displayed image is adequately high by efficiently using the light emitted from the light source.

In the display device according to the present invention, the light source can be such that successively and repeatedly emit a plurality of light beams with different wavelengths. By setting the repetition frequency adequately higher than that recognizable by a human, the formed image can be visually recognized as a composed image obtained by composing images with a plurality of colors.

It is preferable for the display device according to the present invention that the optical member is a first prism having a triangle prism shape. It is also preferable for the display device to further include
f) a second prism provided at a position in which the light that has been reflected on the plurality of the reflection surfaces oriented to the first direction and passed through the first prism is incident, the second prism being configured to compensate for the difference in the optical path length inside the first prism.

As long as the aforementioned requirements are satisfied, the second prism may have a shape the same as or different from that of the first prism. One of the faces of the first prism and one of the faces of the second prism may be arranged in parallel, or may be arranged in non-parallel.

The display device according to this embodiment can be configured by arranging two prisms having the same triangle-prism shape (triangle prisms), to constitute a parallelogram in a planar view (a rectangle when the two prisms are the same right-angle triangle prisms), for example. With this configuration, distances (optical path lengths) through which the light reflected on the reflection surface oriented to the first direction to form the image passes the inside of the respective first and second prisms are equalized, facilitating the design of the optical system.

It is preferable for the display device according to the aforementioned embodiment, which has two triangle prisms, that the first prism and the second prism are both right-angle triangle prisms, and the hypotenuse planes of the first prism and the second prism are disposed in parallel and opposite to each other.

With this configuration, the outer shape of the combination of the two prisms is made rectangular block-like shape, and thus the display device can be small.

It is further preferable for the display device according to the present invention that the light source emits the light to the optical member so that the light is orthogonally incident in the optical member. With this configuration, the distance between the light source and the optical member can be shortened, so that the display device can be small.

It is further preferable for the display device according to the present invention that a main light beam of the light reflected on a predetermined reflection surface among the reflection surfaces of the reflection display element is orthogonally incident in the optical member, when the predetermined reflection surface is oriented to the first direction. With this configuration, the distance between the reflection display element and the optical member can be shortened, so that the display device can be small.

The predetermined reflection surface is a reflection surface positioned at the center of the reflection surfaces (center pixel) to be used for forming an image. For example, in a configuration that light is emitted to all of a plurality of reflection surfaces included in the reflection display element to form an image, the predetermined reflection surface is to be positioned at the center of the reflection surfaces (of a reflection unit) arranged in the two-dimensional manner. Meanwhile, in a configuration that light is emitted to a part of a plurality of reflection surfaces included in the reflection display element to form an image, the predetermined reflection surface is to be positioned at the center of the part of the reflection surfaces.

### ADVANTAGEOUS EFFECTS OF INVENTION

The display device according to the present invention is used, so that the light emitted from a light source can be effectively used.

### BRIEF DESCRIPTION OF DRAWINGS

Fig. 1 is a schematic configuration diagram of a conventional display device.
Fig. 2 is a schematic configuration diagram of an embodiment of a display device according to the present invention.
Fig. 3 is a schematic configuration diagram of another embodiment of the display device according to the present invention.

### DESCRIPTION OF EMBODIMENTS

An embodiment of the display device according to the present invention is described as follows, with reference to the drawings.

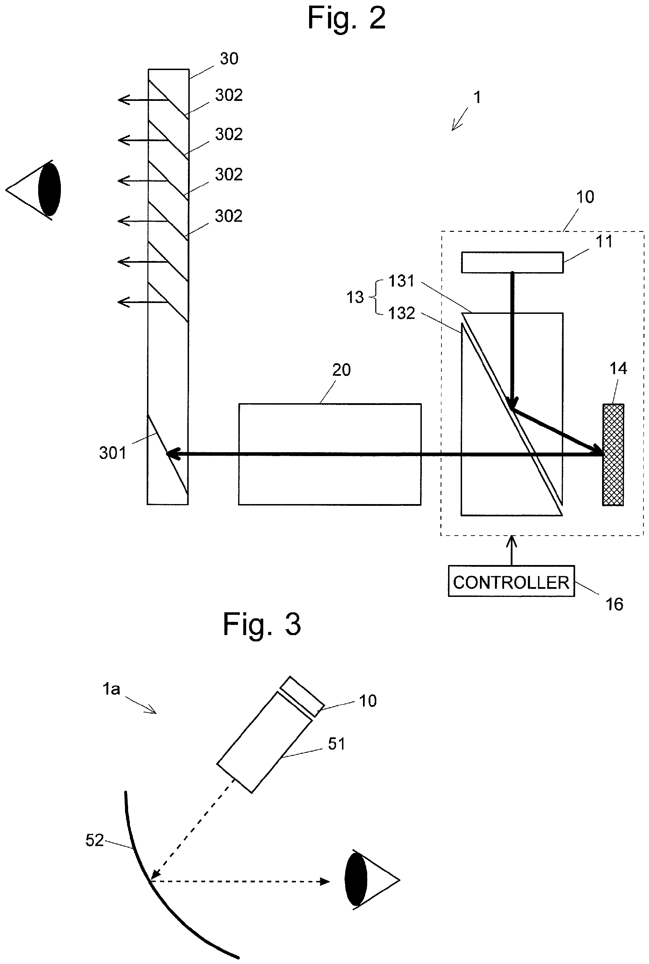

Fig. 2 is a schematic configuration diagram of the display device according to the present embodiment. The display device includes an image forming unit 10, a collimator optical system 20, and a light guide 30. The image forming unit 10 includes a light source 11, an optical member 13 that includes a first prism 131 and a second prism 132 which are right-angle prisms having the same shape, and a digital micromirror device 14. The first prism 131 and the second prism 132 are opposite to each other so that their inclined planes are slightly apart from each other. The outer shape of the combined first and second prisms 131 and 132 is a rectangular parallelepiped shape (thus, the corresponding faces of the respective prisms having the same shape are all parallel to each other). Although two right-angle prisms are used in the present embodiment, an optical member in which two triangle prisms having the same shape or different shapes are combined so as to have a quadrangle outer shape in the top plan view, can be used.

The light source 11 has a red LED, a green LED, a blue LED, and a diffusion plate. Light emitted from each of the red LED, green LED, and blue LED successively and repeatedly in accordance with control signals from the controller 16 is widened to planar light. The red LED, the green LED, and the blue LED are capable of adjusting the quantity of emitted light, and thus capable of appropriately changing the quantities of the light of the respective colors. Accordingly, the color combination of an image to be formed can be adjusted. In the present embodiment, Although the light of the individual colors, which is emitted from each of the LEDs, is widened to the planar light in the light source of the present embodiment, another type of light source in which light emitted from the LEDs of the respective colors is subjected to the two-dimensional scanning at high speed, can also be used.

The digital micromirror device 14 is a display element provided with multiple mirrors each of which corresponds to a single pixel and which are arranged in a latticed pattern, and a driving unit for individually changing the angle of a reflection surface of each of the mirrors. A predetermined voltage is applied to the driving unit under control of the controller 16, to thereby switch the state of each of the pixels between the ON state and the OFF state. Each of the mirrors is controlled so that its reflection surface is oriented to a first direction during the ON state, and oriented to a second direction during the OFF state.

In the image forming unit 10 according to the present embodiment, the light emitted from the respective three LEDs is switched at a frequency adequately higher than a frequency at which humans can recognize the switching in the emitted light. The angle of the reflection surface of each mirror included in the digital micromirror device 14 is also controlled pursuant to the switching. Accordingly, the images displayed on the light guide 30 can be visually recognized as composed images obtained by composing images of the respective colors.

The planar-shaped light emitted from the light source 11 enters the first prism 131 at a right angle. Then, the light passes through the first prism 131 and is incident in the inclined plane at a predetermined angle. The predetermined angle is larger than an angle (critical angle) at which the light that has passed through a medium of the first prism 131 and reached the inclined plane is prevented from being emitted toward the atmosphere, but is allowed to be totally reflected on the inclined plane. The predetermined angle varies depending on the medium of the first prism 131. In the present embodiment, the medium of the first prism 131 is N-BK-7 (the refractive index is 1.52). Accordingly, the critical angle of the inclined plane is 41 degrees. The light is emitted to the inclined plane so that an incident angle is larger than 41 degrees. For the medium of the first prism 131, materials (glass, resin, and so on, for example) other than N-BK-7 can be used. Thus, the angle at which the light is incident in the inclined plane inside the first prism 131 is adjusted to an angle according to the refractive index of the material to be used (so that the light is totally reflected on the inclined plane).

The light totally reflected inside the first prism 131 is emitted from the first prism 131, and incident in the digital micromirror device 14. As previously mentioned, each of the mirrors in the digital micromirror device 14 is controlled so that the reflection surface of each mirror is oriented to the first direction during the ON state, and oriented to the second direction during the OFF state. The light reflected on the mirrors which are controlled to be in the ON state and are oriented to the first direction (i.e., the light for forming an image) is incident in the first prism 131. Meanwhile, the light reflected on the mirrors controlled to be in the OFF state travels in the direction along which the light is not incident in the first prism 131.

In the image forming unit 10 according to the present embodiment, the digital micromirror device 14 is disposed in parallel to one of the side faces of the first prism 131. In such an arrangement, the first prism 131 to be used has an inclined plane inclined at an angle at which the main light beam of the light reflected on the center pixel in the digital micromirror device 14 (mirrors controlled in the ON state inside the digital micromirror device 14) is orthogonally incident in the first prism 131. The main light beam of the light reflected on the center pixel (a mirror controlled to be in the ON state) in the digital micromirror device 14 is a light beam passing through the center of the light (light flux) reflected on the mirror positioned at the center (center pixel) among the mirrors to be used for forming an image.

In the display device 1 according to the present embodiment, the planar-shaped light emitted from the light source 11 in the image forming unit 10 is orthogonally incident in the first prism 131. Accordingly, a distance between the light source 11 and the first prism 131 can be shortened. In addition, the main light beam of the light reflected on the center pixel (mirror controlled in the ON state) in the digital micromirror device 14 is orthogonally incident in the first prism 131. Accordingly, a distance between the digital micromirror device 14 and the first prism 131 can be shortened. With such a configuration, the image forming unit 10 can be small, whereby the display device 1 can also be small.

The light incident in the first prism 131 from the digital micromirror device 14 passes through the first prism 131, then enters the second prism 132, and also passes through the second prism 132. In the image forming unit 10 according to the present embodiment, the first prism 131 and the second prism 132 which have the same shape are arranged so as to define the outer shape of their combination to be a rectangular parallelepiped shape. Accordingly, an optical path length of the reflected light from (the mirror controlled to be in the ON state in) the digital micromirror device 14 becomes uniform irrespective of the position of the mirror. Therefore, the design of the optical system is facilitated.

The image formed in the image forming unit 10 (the light that forms the image) is subsequently deflected to a parallel light flux in the collimator optical system 20 including a collimator lens and so on, and is introduced in the light guide 30. The light guide 30 is a plate-shaped optical member made of optical glass (BK7, or the like). A reflection surface 301 is formed on one side inside the light guide 30, and a plurality of semi-transparent surfaces 302 are formed on the other side. The light introduced in the aforementioned one side of the light guide 30 is reflected on the reflection surface 301 and travels toward the other side while the total reflection is repeated inside the light guide 30. Then, the light is reflected on the plurality of semi-transparent surfaces 302 to be emitted outward from the light guide 30. In this configuration, the light flux (exit pupil) of the image formed in the image forming unit 10 is magnified. Although the light guide 30 having the reflection surface 301 and the plurality of the semi-transparent surfaces 302 is used in the present embodiment, light guides having other configurations can also be used. For example, a light guide which the light flux of an image enters by transmission and/or refraction in place of the reflection surface 301, or a light guide having a hologram surface in place of the semi-transparent surfaces 302 (Non Patent Literature 1, for example) can be used.

In the display device 1 according to the present embodiment, the planar shaped light emitted from the light source 11 is incident in a wall face inside the first prism 131 at an incident angle larger than or equal to the critical angle, and is totally reflected on the wall face so as to be incident in the digital micromirror device 14. Therefore, the light is effectively used in terms of its quantity to form an image with high luminance without losing, in terms of the quantity, the light emitted from the light source, unlike a conventional display device using a polarized beam splitter. In particular, when the light flux of the image formed in the image forming unit 10 is magnified in the light guide 30 as in the display device 1 according to the present embodiment, the luminance decreases as the light flux (exit pupil) is magnified. In view of this, it is preferable to use the configuration according to the present embodiment in which the light emitted from the light source 11 can be effectively used in terms of the quantity.

The aforementioned embodiment is an example of the display device according to the present invention, and can be appropriately modified along with purposes of the present invention.

In the above embodiment, the first prism 131 and the second prism 132 are combined to form the optical member 13. However, if the first prism 131 is used alone, the light emitted from the light source 11 can be effectively used in terms of the quantity, as in the aforementioned embodiment. In such a case, the light reflected on the digital micromirror device 14 may directly enter the collimator optical system 20, without entering the first prism 131. Alternatively, a glass plate, for example, which has an appropriate shape capable of allowing the light to be totally reflected on its interior may be used, in place of the first prism.

Furthermore, although the display device uses the light guide 30 in the aforementioned embodiment, the display device may use a combiner 52, as shown in Fig. 3. In a display device 1a, the light that constitutes an image formed in the image forming unit 10 passes through a virtual image displaying optical system 51. Then, the light is reflected on the combiner 52 having a curved shape or a planar shape, and is incident in the eyes of a user. Accordingly, the user can observe a virtual image displayed in front of the user through the combiner 52. A head-up display may also be embodied with the same configuration.

Although the light source 11 provided with LEDs respectively emitting three primary colors of red, green, and blue is used in the above embodiment, a device that displays monochrome images or composed images obtained by composing a single color or two colors can have the same configuration.

### REFERENCE SIGNS LIST

- 1, 1a: Display Device
- 10: Image Forming Unit
- 11: Light Source
- 13: Optical Member
- 131: First Prism
- 132: Second Prism
- 14: Digital Micromirror Device
- 16: Controller
- 20: Collimator Optical System
- 30: Light Guide
- 301: Total Reflection Surface
- 302: Semi-Transparent Surface
- 51: Virtual Image Displaying Optical System
- 52: Combiner

## Claims

1. A display device comprising an image forming unit that includes:
a) an optical member configured to have, in its inside, a wall face on which light incident at an incident angle larger than or equal to a predetermined angle is totally reflected;
b) a light source configured to emit light so that the light is incident in the wall face at an incident angle larger than or equal to the predetermined angle; and
c) a reflection display element configured to have a plurality of two-dimensionally arranged reflection portions each having a reflection surface capable of changing its orientation between a first direction and a second direction in accordance with an external control signal, the reflection display element being disposed so that the reflection surfaces oriented to the first direction reflect the light that has been reflected on the wall face toward a direction different from a direction along which the light is incident in the reflection display element;
the display device further comprising:
d) a collimator optical system configured to deflect the light emitted from the image forming unit to a parallel light flux; and
e) a light guide configured to magnify the parallel light flux.

2. The display device according to claim 1, wherein
the light source is configured to successively and repeatedly emit a plurality of light beams with different wavelengths.

3. The display device according to claim 1, wherein
the optical member is a first prism having a triangle prism shape, the display device further comprising
f) a second prism provided at a position in which the light that has been reflected on the plurality of the reflection surfaces oriented to the first direction and passed through the first prism is incident, the second prism being configured to compensate for a difference in optical path length inside the first prism.

4. The display device according to claim 3, wherein
the first prism and the second prism are right-angle triangle prisms and the hypotenuse planes of the first prism and the second prism are disposed in parallel and opposite to each other.

5. The display device according to claim 1, wherein
the light source is configured to emit the light to the optical member so that the light is orthogonally incident in the optical member.

6. The display device according to claim 1, wherein
a main light beam of the light reflected on a predetermined reflection surface among the reflection surfaces included in the reflection display element is orthogonally incident in the optical member, when the predetermined reflection surface is oriented to the first direction.

7. A display device comprising an image forming unit that includes:
a) an optical member configured to have, in its inside, a wall face on which light incident at an incident angle larger than or equal to a predetermined angle is totally reflected;
b) a light source configured to emit light so that the light is incident in the wall face at an incident angle larger than or equal to the predetermined angle; and
c) a reflection display element configured to have a plurality of two-dimensionally arranged reflection portions each having a reflection surface capable of changing its orientation between a first direction and a second direction in accordance with an external control signal, the reflection display element being disposed so that the reflection surfaces oriented to the first direction reflect the light that has been reflected on the wall face toward a direction different from a direction along which the light is incident in the reflection display element;
the display device further comprising
d) a virtual image displaying optical system that has a semi-transparent face with a planar shape or a curved shape, the semi-transparent face being provided in front of eyes of a user.
